# EUROPEAN PATENT SPECIFICATION

(11) **EP 2 927 204 B1**
(45) Date of publication and mention of the grant of the patent: **30.05.2018**
(21) Application number: 13857990.9
(22) Date of filing: 29.11.2013
(51) Int. Cl.: F02K 9/42, C06B 25/34, C06B 31/00, C06B 47/00

(54) **LIQUID PROPELLANT**
FLÜSSIGANTRIEBSMITTEL
AGENT PROPULSEUR LIQUIDE

(30) Priority: 30.11.2012 JP 2012263446
(43) Date of publication of application: 07.10.2015
(73) Proprietor: Carlit Holdings Co. Ltd., Tokyo 104-0031 (JP)
(72) Inventor: IWAI, Keiichiro, Shibukawa-shi Gunma 379-1111 (JP); NOZOE, Katsuhiko, Tokyo 104-0031 (JP)
(74) Representative: Berkkam, Ayfer
(86) International application number: PCT/JP2013/082160
(87) International publication number: WO 2014/084344

(56) References cited:
- JP-A- 2002 020 191
- JP-A- 2002 511 382
- JP-A- 2002 537 218
- US-A- 3 212 254

## Description

### TECHNICAL FIELD

The present disclosure relates to a liquid propellant, and more specifically, relates to a liquid propellant using a dinitramide derivative and an amine nitrate.

### BACKGROUND ART

In general, a liquid propellant is used as a propelling source for a flying object, such as a rocket, and the like. In the space rocket field, thrust can be controlled by suspending combustion and re-ignition, and therefore, a liquid propellant is utilized in posture control for an artificial satellite and the like using a thruster, as well as a main engine of a rocket.

In general, there are two types of liquid propellants, that is, a two-component mixture type and a one-component type. The two-component mixture type can achieve large thrust by being burned using a liquid oxidizer and a liquid fuel but, since a supply device requires two systems, a complicated system is needed. The one-component type may be burned by a contact with a catalyst or external energy, and therefore, has a characteristic in which the system may be simplified.

Examples of a liquid oxidizer used for a two-component mixture type liquid propellant include liquid oxygen, dinitrogen tetroxide, and the like, and examples of a liquid fuel used therefor includes liquid hydrogen, and the like. Although these are propellants that satisfy a certain performance requirement, liquid oxygen and liquid hydrogen have to be handled at extremely low temperature, dinitrogen tetroxide has high toxicity, and therefore, a protective suit or the like has to be used to ensure safety, thus resulting in a problem in handling.

For one-component type propellants, propellants using hydrazine, an aqueous solution of hydroxylamine nitrate have been developed and studied.

Hydrazine has high toxicity and is easily evaporated, and therefore, in handing hydrazine, wearing of a special suit and an air supply equipment therefor are needed. Furthermore, specified working staff and medical staff are needed, parallel work is prohibited during filling work, and like problems, which notably reduce work efficiency in launching, arise.

Hydroxylamine nitrate has many problems in safety and technical aspects, including, for example, a problem in which hydroxylamine nitrate has detonation, which was a cause of an explosion accident in a row material plant, and the like.

PATENT DOCUMENT 1 describes a liquid oxidizer using one or more oxidizers selected from a group consisting of hydroxylamine nitrate, hydrozinium nitroformate, ammonium dinitramide, ammonium nitrate, and a hydrogen peroxide, and a hybrid propellant using the liquid oxidizer. By using, as the liquid oxidizer, an aqueous solution of hydroxylamine nitrate, hydrozinium nitroformate, ammonium dinitramide, ammonium nitrate, and a hydrogen peroxide, a system at extremely-low temperature and toxicity, which may be problems of liquid oxide and dinitrogen tetroxide that are conventional liquid oxidizers, are improved and specific impulse equivalent to that achieved by a conventional technique can be achieved, but noticeable increase in specific impulse has not been achieved.

PATENT DOCUMENT 2 describes a propellant using, as an oxidizer, a salt using dinitramide anion. As the fuel, monohydric alcohol, dihydric alcohol, trihydric alcohol, or polyhydric alcohol (specifically, glycerol (glycerine), or glycine) is useful, and ammonium dinitramide (ADN), water, glycerol are described as examples of specifically preferable compounds. Even when a mixture of ADN and glycerol or glycine is used, water is indispensable in using the mixture as a liquid propellant, and as a result, specific impulse is disadvantageously reduced.

In view of the foregoing, there have been demands for a liquid propellant with excellent specific impulse, which has low toxicity and can be easily handled.

### PATENT DOCUMENT

PATENT DOCUMENT 1: JP2002-020191 A
PATENT DOCUMENT 2: JP 2002-537218 A

US 3 212 254 A discloses a two-component monopropellant comprising a mixture of an oxidant and an amine nitrate selected from the group consisting of piperidine nitrate, pyridine nitrite, Z-methylpyridine nitrate, and amine nitrates.

### SUMMARY OF THE INVENTION

### TECHNICAL PROBLEM

An object of the present invention is to provide a liquid propellant with excellent specific impulse, which has low toxicity and can be easily handled.

### SOLUTION TO THE PROBLEM

As a result of keen examinations, the present inventors found that the above-described object can be resolved by using a liquid propellant as defined by the features of claim 1 containing at least ammonium dinitramide and monomethylamine nitrate.

That is, the present invention is as defined in claim 1.

A first embodiment is directed to a liquid propellant characterized by containing at least a dinitramide derivative represented by the following general formula (1) and an amine nitrate represented by the following general formula (2).

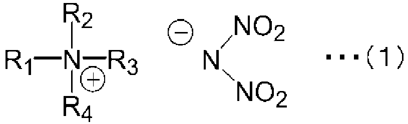

In the general formula (1), R₁ - R₄, which may be the same or different, are hydrogen atom or alkyl groups having 1-8 carbon atoms.

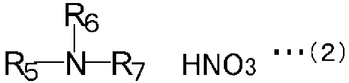

In the general formula (2), R₅ is an alkyl group having 1-8 carbon atoms, and R₆ - R₇, which may be the same or different, are hydrogen atom or alkyl group having 1-8 carbon atoms.

A second embodiment is directed to the liquid propellant described in the first invention, characterized in that the dinitramide derivative is ammonium dinitramide represented by the following formula (A).

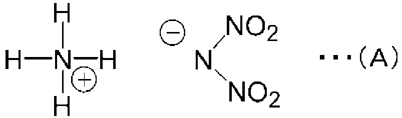

A third embodiment is directed to the liquid propellant described in the first or second rembodiment characterized in that the amine nitrate is monoalkylamine nitrate.

A fourth embodiment is directed to the liquid propellant described in any one of the first to third embodiments, characterized by containing a urea derivative, which will be described later, and in that the amount of urea derivative is preferably 5 - 20 wt%.

A fifth rembodiment is directed to the liquid propellant described in any one of the first to fourth embodiments, characterized in that the weight ratio of the dinitramide derivative to the amine nitrate is 1/9 to 9/1, and preferably, 4/6 to 7/3.

A sixth rembodiment is directed to the liquid propellant described in any one of the first to fifth embodiments, characterized in that the total amount of the dinitramide derivative and the amine nitrate is 80 wt% or more.

A seventh rembodiment is directed to the liquid propellant described in any one of the first to sixth embodiments, in which the liquid propellant is substantially free of hydrazine.

### ADVANTAGES OF THE INVENTION

According to the present invention, a liquid propellant with excellent specific impulse, which can be easily handled, and preferably, has low toxicity, can be provided.

### BRIEF DESCRIPTION OF THE DRAWINGS

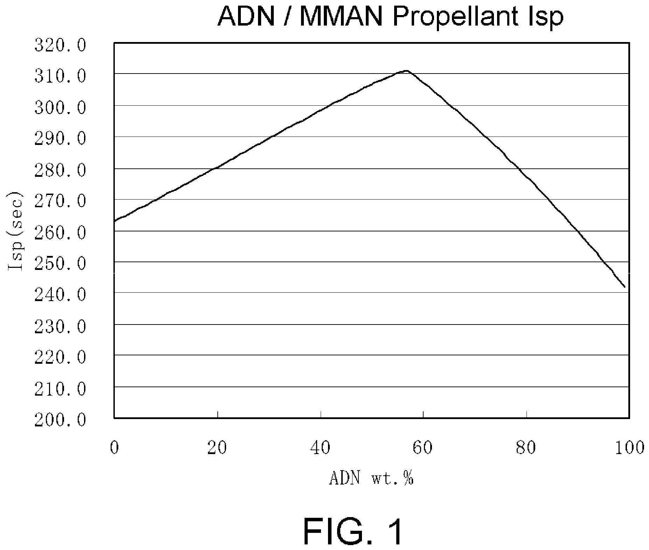

FIG. 1 is a graph illustrating the relationship for specific impulse of a liquid propellant using ammonium dinitramide and monomethylamine nitrate.

### DESCRIPTION OF EMBODIMENTS

The present invention is directed to a liquid propellant characterized by containing at least ammonium dinitramide and monomethylamine nitrate.

The term "liquid propellant" herein means a propellant that has fluidity when the liquid propellant is supplied and ejected in a rocket engine system. As long as fluidity is not lost, the liquid propellant may contain a solid material.

In the above-described general formula (1), R₁ - R₄, which may be the same or different, are hydrogen atom or alkyl group having 1 - 8 carbon atoms.

Preferably, as the alkyl groups having 1 - 8 carbon atoms, alkyl groups having 1 - 6 carbon atoms are preferable, and specifically, examples of the alkyl groups having 1 - 8 8 carbon atoms include a methyl group, an ethyl group, a propyl group, a butyl group, a pentyl group, a hexyl group, and the like, and among these, a methyl group is specifically preferable because the methyl group has excellent solubility.

Examples of a cationic part of ammonium dinitramide represented by the general formula (1) includes an ammonium cation, a tetramethylammonium cation, a tetraethylammonium cation, a tetrapropylammonium cation, a tetraisopropylammonium cation, a tetrabutylammonium cation, a trimethylethylammonium cation, a triethylmethylammonium cation, a dimethyldiethylammonium cation, a dimethylethylmethoxyethylammonium cation, a dimethylethylmethoxymethylammonium cation, a dimethylethylethoxyethylammonium cation, a trimethylpropylammonium cation, a dimethylethylpropylaminium cation, a triethylpropylammonium cation, and the like.

Among these, the ammonium cation is specifically preferable because the ammonium cation has excellent specific impulse. That is, it is preferable to use the ammonium dinitramide represented by the formula (A), that is, a compound in which R₁ - R₄ are all hydrogen atoms.

As a method for producing ammonium dinitramide, a known production method (JP1997-500795 A, WO91/19669 A, and the like) may be used. Ammonium dinitramide of the above-described general formula (1) can be obtained by preparing a corresponding cation in accordance with the production method.

In the general formula (2), R₅ is an alkyl group having 1 - 8 carbon atoms and R₆ - R₇, which may be the same or different, are hydrogen atom or alkyl group having 1 - 8 carbon atoms. At least one of R₆ and R₇ may be an alkyl group that is the same as that of R₅ or different from that of R₅.

Preferably, as alkyl groups having 1 - 8 carbon atoms, alkyl groups having 1 - 6 carbon atoms are preferable, and specifically, examples of the alkyl groups having 1 - 8 8 carbon atoms include a methyl group, an ethyl group, a propyl group, a butyl group, a pentyl group, a hexyl group, and the like, and among these, the methyl group is specifically preferable because the methyl group has excellent solubility.

Examples of amine of the amine nitrate represented by the general formula (2) include monoalkylamine, dialkylamine, and trialkylamine.

Examples of monoalkylamine include monomethylamine, monoethylamine, monopropylamine, monobutylamine, monopentylamine, monohexylamine, and the like.

Examples of dialkylamine include dimetylamine, diethylamine, dipropylamine, dibutylamine, dipentylamine, dihexylamine, methylethylamine, methylpropylamine, methylbutylamine, ethylpropylamine, ethylbutylamine, and the like.

Examples of trialkylamine include trymethylamine, triethylamine, trypropylamine, tributylamine, tripentylamine, triheptylamine, dimethylethylamine, diethylmethylamin, and the like.

Among these, monoalkylamine is preferable because monoalkylamine has excellent specific impulse, and specifically, monomethylamine is preferable. In other words, both of R₆ and R₇ in the general formula (2) are preferably hydrogen atoms, and specifically, R₅ is preferably a methyl group. As amine nitrate represented by the general formula (2), commercially available amine nitrate may be used and amine nitrate obtained by a known production method may be used. As the production method, for example, a method in which corresponding amine and a nitric acid are caused to react may be used, and specific examples will be described later as Examples.

The liquid propellant using the dinitramide derivative represented by the general formula (1) and the amine nitrate represented by the general formula (2) does not need to use hydrazine and has lower toxicity than a liquid propellant using hydrazine, so that the liquid propellant may be easily handled even without ensuring safety with a protective suite, and the like, and also, has more excellent specific impulse than that of a liquid propellant that has been used up until now. Therefore, preferably, the liquid propellant according to the present invention is substantially free of hydrazine. The expression "substantially free of hydrazine" means, for example, that a content thereof is 1 wt% or less. Preferably, the total amount of the dinitramide derivative represented by the general formula (1) and the amine nitride represented by the general formula (2) in the liquid propellant according to the present invention is 75 wt% or more, more preferably, 80 wt% or more, and further more preferably, 90 wt% or more.

Regarding the ratio between the dinitramide derivative represented by the above-described general formula (1) and the amine nitrate represented by the above-described general formula (2), (the weight of the dinitramide derivative)/(the weight of the amine nitrate) is preferably 10/90 to 90/10, more preferably, 20/80 to 80/20, and further more preferably, 40/60 to 70/30. Specifically excellent specific impulse may be achieved by setting the ratio in the above-described ranges.

### <Freezing Point Depressant>

The liquid propellant according to the present invention may contain a urea derivative, which will be described below, in order to depress the freezing point of the liquid propellant. In the present invention, "a urea derivative" may be "urea" itself. The liquid propellant according to the present invention preferably contains 5 - 20 wt% of a urea derivative.

The urea derivative is a compound represented by the following general formula (3), which has a urea bond in a molecule.

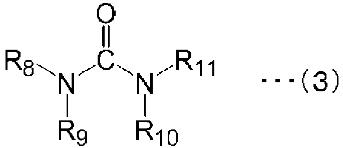

In the general formula (3), R₈ - R₁₁, which may be the same or different, are hydrogen atom, alkyl group having 1 - 6 carbon atoms, alkenyl group having 2-6 carbon atoms, aryl group having 6 - 10 carbon atoms, alkylamino group having 1 - 6 carbon atoms, or dialkylamino group having 2 - 6 carbon atoms. Optionally, two or more of R₈ - R₁₁ may be bonded together to form a five- or six-membered ring, and these groups may further have halogen group(s).

Specific examples of the urea derivative represented by the general formula (3) include urea, N-methyl-N'-methylurea, N-methyl-N'-ethylurea, N-methyl-N'-propylurea, N-methyl-N'-butylurea, N-metyl-N'-pentylurea, N-methyl-N'-hexylurea, N-methyl-N'-phenylurea, N-methyl-N'-stearylurea, N-ethyl-N'-ethylurea, N-ethyl-N'-propylurea, N-ethyl-N'-butylurea, N-ethyl-N'-pentylurea, N-ethyl-N'-hexylurea, N-ethyl-N'-phenylurea, N-ethyl-N'-stearylurea, N-butyl-N'-pentylurea, N-butyl-N'-hexylurea, N-butyl-N'-phenylurea, N-butyl-N'-stearylurea, and the like, and among these, urea, that is, a form in which R₈ - R₁₁ are all hydrogen, is specifically preferable because urea has an excellent advantage of depressing the freezing point.

Whether or not water is used as a solvent, the liquid propellant according to the present invention is in a liquid state, and therefore, water is not necessarily used, but in order to depress the freezing point of the liquid propellant or the like, water may be added, as appropriate.

For the liquid propellant according to the present invention, in order to adjust various performances, a fuel may be used. Examples of the fuel include alcohols, aminos, ketones, and the like.

Examples of alcohols include methanol, ethanol, ethanediol, propanol, isopropanol, propanediol, propanetriol, butanol, butanediol, and the like.

Examples of aminos include glycine, alanine, valine, leucine, isoleucine, and the like.

Examples of ketones include acetone, methylethylketone, methylpropylketone, methylisobutylketone, dimethylketone, diethylketone, methylamylketone, cyclohexanone, isophorone, and the like.

### <Additives>

As the liquid propellant according to the present invention, a liquid propellant may contain an additive and thus be used. Examples of the additive include a combustion catalyst, a combustion aid, and the like.

A combustion catalyst is a catalyst that promotes combustion, and more specifically, increases reaction activity, enables ignition at low temperature, and can be used in a wide range. Examples of the combustion catalyst include rhodium, ruthenium, platinum, palladium, iridium, and the like.

A combustion aid is an additive that increases specific impulse of a liquid propellant, and examples of the combustion aid include aluminum, magnesium, boron, titanium, graphite, and the like, in a powder form.

As for a conventional liquid propellant, such as dinitrogen tetroxide, and the like, the average density at 23 °C was about 1.44 g/cm³ or less. On the other hand, the average density for the liquid propellant according to the present invention at 23 °C is preferably 1.45 - 1.52 g/cm³. As described above, excellent specific impulse, which will be described later, may be achieved by increasing the average density.

### <Specific Impulse>

Specific impulse is a measure of fuel efficiency of a rocket engine, and represents the magnitude of thrust with respect to a propellant flow rate. As a calculation formula, "specific impulse = thrust/(propellant flow rate * gravitational acceleration)" is used and the units are seconds. In other words, specific impulse is "seconds for which the generation of unit thrust can be continued by a propellant of a unit weight". Specific impulse is related to the pressure and temperature of the inside of an engine, the composition and thermodynamic characteristic of a combustion product, an atmospheric pressure, and an expansion velocity.

Vacuum specific impulse of a liquid propellant can be calculated using NASA CEA2 chemical equilibrium calculation program (Chemical Equilibrium with Application, NASA-Glenn chemical equilibrium program CEA2, May 21 2004, by Bonnie McBride and Sanford Gordon). The results calculated for the specific impulse of a liquid propellant using ammonium dinitramide and monomethylamine nitrate by the program are given in FIG. 1.

The specific impulse calculated using the above-described chemical equilibrium calculation program at a chamber pressure of 10 bar with an opening area ratio of 100 is preferably 240 sec or more, more preferably, 260 sec or more, and specifically, even more preferably, 280 sec or more.

The liquid propellant according to the present invention can achieve specific impulse of, for example, 240 sec or more, and more preferably, 240 - 320 sec. Therefore, the liquid propellant according to the present invention may be optimally used as a liquid propellant for rockets.

### EXAMPLES

The present invention will be described below with reference to Examples, but the present invention is not limited to the Examples.

### (Examples 1 - 10, Comparative Examples 1 - 5)

For Examples 1 - 10 and Comparative Examples 1 - 5, a component 1, a component 2, an additive, and a solvent corresponding to Table 1 were used. For ammonium dinitramide, urea, hydrazine, glycerol, and ammonium nitrate, commercially available reagents were used. For monomethylamine nitrate, monomethylamine nitrate produced in the following manner was used.

### <Synthesis of Monomethylamine nitrate>

Reaction was caused by dropping 187.6 parts of 70% nitric acid to 146.5 parts of a monomethylamine 40% aqueous solution and stirring the obtained mixture at 10 °C or less. After reaction, water was distilled away from the obtained aqueous solution under the conditions of 60 °C and 30 mmHg to obtain a saturated aqueous solution of monomethylamine nitrate. The saturated aqueous solution of monomethylamine nitrate was added to 280 parts of isopropyl alcohol and the obtained mixture was stirred to precipitate a crystal of monomethylamine nitrate. The obtained crystal was filtered, was washed with isopropyl alcohol, and was dried, and thus, 186.4 parts of monomethylamine nitrate was obtained.

**[Table 1]**

| | Liquid Propellant | | | |
|---|---|---|---|---|
| | Component 1 | Component 2 | Additive | Solvent |
| | (wt%) | (wt%) | (wt%) | (wt%) |
| Example 1 | ADN | MMAN | - | - |
| | 25 | 75 | | |
| Example 2 | ADN | MMAN | - | - |
| | 50 | 50 | | |
| Example 3 | ADN | MMAN | - | - |
| | 57 | 43 | | |
| Example 4 | ADN | MMAN | - | - |
| | 75 | 25 | | |
| Example 5 | ADN | MMAN | Urea | - |
| | 52 | 39 | 9 | |
| Example 6 | ADN | MMAN | - | Water |
| | 52 | 39 | | 9 |
| Example 7 | ADN | MMAN | Urea | |
| | 50 | 30 | 20 | |
| Example 8 | ADN | MMAN | Urea | |
| | 40 | 40 | 20 | |
| Example 9 | ADN | MMAN | Urea | |
| | 40 | 50 | 10 | |
| Example 10 | ADN | MMAN | Urea | |
| | 60 | 30 | 10 | |
| Comparative Example 1 | ADN | GLU | - | Water |
| | 61 | 13 | | 26 |
| Comparative Example 2 | N₂H₄ | - | - | - |
| | 100 | | | |
| Comparative Example 3 | ADN | AN | - | - |
| | 60 | 40 | | |
| Comparative Example 4 | ADN | AN | Urea | - |
| | 50 | 40 | 10 | |
| Comparative Example 5 | ADN | AN | - | Water |
| | 50 | 40 | | 10 |

Abbreviated words in Table 1 represent as follows.
ADN: ammonium dinitramide (compound A)
MMAN: monomethylamine nitrate
Urea: urea
GLU: glycerol (glycerine)
N₂H₄: hydrazine
AN: ammonium nitrate

In order to obtain vacuum specific impulse of a liquid propellant, calculation was performed using NASA CEA2 chemical equilibrium calculation program (Chemical Equilibrium with Application, NASA-Glenn chemical equilibrium program CEA2, May 21 2004, by Bonnie McBride and Sanford Gordon). As initial conditions, heat of formation of each component was input as follows, 10 bar was input for the chamber pressure, and 100 was input for the nozzle opening area ratio, and thus, calculation was performed.

The heat of formation (cal/mol) of each component input for use in the above-described calculation is as follows.

| | |
|---|---|
| Ammonium dinitramide (N₄H₄O) | : -35,500 |
| Monomethylamine nitrate (CH₆O₃N₂) | : -80,981 |
| Urea (CH₄ON₂) | : -79,679 |
| Hydrazine (N₂H₄) | : +12,103 |
| Glycerol (C₃H₈O₃) | : -159,775 |
| Water (H₂O) | : -68,315 |

The state of the liquid propellant at ambient temperature was evaluated by visual examination. A liquid that does not contain a solid state material at all, a liquid that partially contains a solid state material, and a perfect solid are labeled as A, B, and X, respectively. The vacuum specific impulse and the state of the liquid propellant at normal temperature are summarized in Table 2.

**[Table 2]**

| | Vacuum Specific Impulse Isp (sec) | State of Liquid Propellant at Normal Temperature |
|---|---|---|
| Example 1 | 284.9 | B |
| Example 2 | 306.8 | B |
| Example 3 | 311.3 | B |
| Example 4 | 285.3 | B |
| Example 5 | 293.7 | A |
| Example 6 | 283.8 | A |
| Example 7 | 280.0 | A |
| Example 8 | 273.7 | A |
| Example 9 | 281.3 | A |
| Example 10 | 299.4 | A |
| Comparative Example 1 | 256.5 | A |
| Comparative Example 2 | 237.5 | A |
| Comparative Example 3 | 221.1 | X |
| Comparative Example 4 | 245.3 | B |
| Comparative Example 5 | 234.2 | B |

According to Table 2, it is understood that the specific impulse is better for Examples 1 - 10 than for Comparative Examples 1 - 5. Also, in Examples 1 - 10, since the freezing point depressed, and therefore, it is understood that the liquid propellant fully contains a liquid at normal temperature.

### INDUSTRIAL APPLICABILITY

A liquid propellant according to the present invention does not have toxicity, is easy to handle, and has excellent specific impulse, and therefore, can be used not only for a liquid propellant for rockets but also for various applications.

## Claims

1. A liquid propellant, comprising at least:
a dinitramide derivative represented by the following general formula (1) 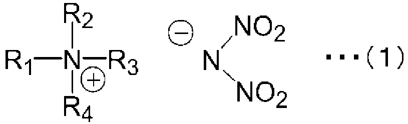 (where R₁ - R₄, which may be the same or different, are hydrogen atom or alkyl group having 1 - 8 carbon atoms); and
an amine nitrate represented by the following general formula (2) 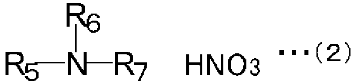 (where R₅ is an alkyl group having 1 - 8 carbon atoms, and R₆ - R₇, which may be the same or different, are hydrogen atom or alkyl group having 1 - 8 carbon atoms), wherein the dinitramide derivative is ammonium dinitramide represented by the following formula (A) 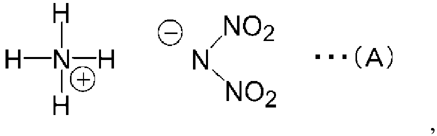 and
the amine nitrate is monomethylamine nitrate.

2. The liquid propellant of claim 1, wherein the total amount of the dinitramide derivative and the amine nitrate is 80 wt% or more.

3. The liquid propellant of claim 1, further comprising:
a urea derivative represented by the following general formula (3) 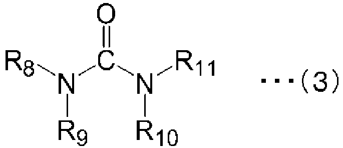 (where R₈ - R₁₁, which may be the same or different, are hydrogen atom, alkyl group having 1 - 6 carbon atoms, alkenyl group having 2 - 6 carbon atoms, aryl group having 6 - 10 carbon atoms, alkylamino group having 1 - 6 carbon atoms, or dialkylamino group having 2 - 6 carbon atoms, or optionally two or more of R₈ - R₁₁ are bonded together to form a five- or six-membered ring that may have halogen groups).

4. The liquid propellant of claim 3, wherein the amount of urea derivative is 5 - 20 wt%.

5. The liquid propellant of claim 1, wherein the weight ratio of the dinitramide derivative to the amine nitrate is 4/6 to 7/3.

6. The liquid propellant of claim 1, wherein the liquid propellant is substantially free of hydrazine.

7. The liquid propellant of claim 2, wherein the weight ratio of the dinitramide derivative to the amine nitrate is 4/6 to 7/3.

8. The liquid propellant of claim 3, wherein the total amount of the dinitramide derivative and the amine nitrate is 80 wt% or more.

9. The liquid propellant of claim 8, wherein the liquid propellant is substantially free of hydrazine.

## Patentansprüche

1. Flüssiges Treibmittel, umfassend mindestens:
ein Dinitramid-Derivat der folgenden allgemeinen Formel (1) 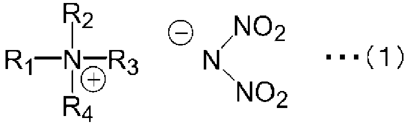 (wobei R₁-R₄, die gleich oder verschieden sein können, ein Wasserstoffatom oder eine Alkylgruppe mit 1 bis 8 Kohlenstoffatomen sind); und
ein Aminnitrat der folgenden allgemeinen Formel (2) 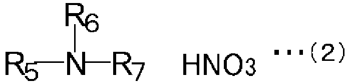 (wobei R₅ eine Alkylgruppe mit 1 bis 8 Kohlenstoffatomen ist, und R₆-R₇, die gleich oder verschieden sein können, ein Wasserstoffatom oder eine Alkylgruppe mit 1 bis 8 Kohlenstoffatomen sind), wobei das Dinitramidderivat Ammoniumdinitramid ist, dargestellt durch die folgende Formel (A) 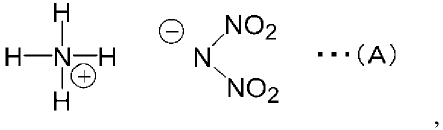 und
das Aminnitrat Monomethylaminnitrat ist.

2. Flüssiges Treibmittel nach Anspruch 1, wobei die Gesamtmenge des Dinitramidderivats und des Aminnitrats 80 Gew.% oder mehr beträgt.

3. Flüssiges Treibmittel nach Anspruch 1, weiterhin umfassend:
ein Harnstoffderivat, dargestellt durch die folgende allgemeine Formel (3) 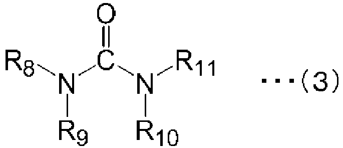 (wobei R₈-R₁₁, die gleich oder verschieden sein können, ein Wasserstoffatom, eine Alkylgruppe mit 1-6 Kohlenstoffatomen, eine Alkenylgruppe mit 2-6 Kohlenstoffatomen, eine Arylgruppe mit 6-10 Kohlenstoffatomen und eine Alkylaminogruppe mit 1-6 Kohlenstoffatomen sind oder eine Dialkylaminogruppe mit 2-6 Kohlenstoffatomen oder wahlweise zwei oder mehr von R₈-R₁₁ sind miteinander verbunden, um einen fünf- oder sechsgliedrigen Ring zu bilden, der Halogengruppen aufweisen kann).

4. Flüssiges Treibmittel nach Anspruch 3, wobei die Menge an Harnstoffderivat 5-20 Gew.% beträgt.

5. Flüssiges Treibmittel nach Anspruch 1, wobei das Gewichtsverhältnis des Dinitramidderivats zu dem Aminnitrat 4/6 bis 7/3 beträgt.

6. Flüssiges Treibmittel nach Anspruch 1, wobei das flüssige Treibmittel im wesentlichen frei von Hydrazin ist.

7. Flüssiges Treibmittel nach Anspruch 2, wobei das Gewichtsverhältnis des Dinitramidderivats zu dem Aminnitrat 4/6 bis 7/3 beträgt.

8. Flüssiges Treibmittel nach Anspruch 3, wobei die Gesamtmenge des Dinitramidderivats und des Aminnitrats 80 Gew.% oder mehr beträgt.

9. Flüssiges Treibmittel nach Anspruch 8, wobei das flüssige Treibmittel im Wesentlichen frei von Hydrazin ist.

## Revendications

1. Un propulseur liquide comprenant au moins:
un dérivé de dinitramide représenté par la formule générale suivante (1) 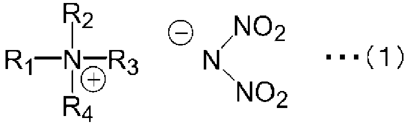
(dans lequel R1 - R4, qui peuvent être identiques ou différents, sont un atome d'hydrogène ou un groupe alkyle ayant 1 - 8 atomes de carbone); et
un nitrate d'amine représenté par la formule générale suivante (2) 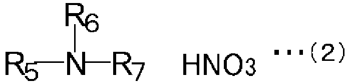 (dans lequel R₅ est un groupe alkyle ayant 1 - 8 atomes de carbone, et R₆ - R₇, qui peuvent être identiques ou différents, sont un atome d'hydrogène ou un groupe alkyle ayant 1 - 8 atomes de carbone), dans lequel le dérivé de dinitramide est le dinitramide d'ammonium représenté par la formule (A) suivante 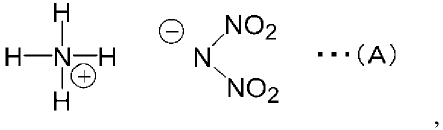 et
le nitrate d'amine est le nitrate de monométhylamine.

2. Le propulseur liquide selon la revendication 1, dans lequel la quantité totale du dérivé de dinitramide et du nitrate d'amine est de 80% en poids ou plus.

3. Le propulseur liquide de la revendication 1, comprenant en outre:
un dérivé d'urée représenté par la formule générale suivante (3): 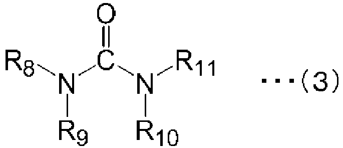 (dans lequel R₈ - R₁₁, qui peuvent être identiques ou différents, sont un atome d'hydrogène, un groupe alkyle ayant 1 - 6 atomes de carbone, un groupe alcényle ayant 2 - 6 atomes de carbone, un groupe aryle ayant 6 - 10 atomes de carbone, un groupe alkylamino ayant 1 - 6 des atomes de carbone, ou un groupe dialkylamino ayant 2 - 6 atomes de carbone, ou éventuellement deux ou plus de R₈ -à R₁₁, sont liés ensemble pour former un cycle à cinq ou six chaînons qui peut avoir des groupes halogéno).

4. Le propulseur liquide selon la revendication 3, dans lequel la quantité de dérivé d'urée est de 5 à 20% en poids.

5. Le propulseur liquide selon la revendication 1, dans lequel le rapport pondéral du dérivé de dinitramide au nitrate d'amine est compris entre 4/6 et 7/3.

6. Le propulseur liquide selon la revendication 1, dans lequel le propulseur liquide est essentiellement exempt d'hydrazine.

7. Le propulseur liquide selon la revendication 2, dans lequel le rapport pondéral du dérivé de dinitramide au nitrate d'amine est compris entre 4/6 et 7/3.

8. Le propulseur liquide selon la revendication 3, dans lequel la quantité totale du dérivé de dinitramide et du nitrate d'amine est de 80% en poids ou plus.

9. Le propulseur liquide selon la revendication 8, dans lequel le propulseur liquide est essentiellement exempt d'hydrazine.
